# EUROPÄISCHE PATENTSCHRIFT

(11) **EP 1 502 043 B1**
(45) Veröffentlichungstag und Bekanntmachung des Hinweises auf die Patenterteilung: **16.11.2005**
(21) Anmeldenummer: 03720525.9
(22) Anmeldetag: 24.04.2003
(51) Int. Cl.: F16H 61/42, F04B 49/00

(54) **HYDROMOTOREINHEIT**
HYDRAULIC MOTOR UNIT
UNITE MOTEUR HYDRAULIQUE

(30) Priorität: 03.05.2002 DE 10219849
(43) Veröffentlichungstag der Anmeldung: 02.02.2005
(73) Patentinhaber: Brueninghaus Hydromatik GmbH, 89275 Elchingen (DE)
(72) Erfinder: BECK, Jochen, 89077 Ulm (DE); HÖRMANN, Werner, 89257 Illertissen (DE); UMEDA, Massao, Tsuchiura-shi, Ibaraki 300-0061 (JP)
(74) Vertreter: Körfer, Thomas
(86) Internationale Anmeldenummer: PCT/EP2003/004282
(87) Internationale Veröffentlichungsnummer: WO 2003/093702

(56) Entgegenhaltungen:
- EP-A- 0 467 440
- EP-A- 1 283 365
- WO-A-00/26563
- DE-A- 4 307 002
- DE-C- 4 234 826
- US-A- 3 854 847
- US-A- 5 907 952
- PATENT ABSTRACTS OF JAPAN vol. 017, no. 252 (M-1412), 19. Mai 1993 (1993-05-19) -& JP 04 370403 A (TOSHIBA MACH CO LTD), 22. Dezember 1992 (1992-12-22)
- PATENT ABSTRACTS OF JAPAN vol. 1999, no. 11, 30. September 1999 (1999-09-30) -& JP 11 166623 A (KOMATSU LTD), 22. Juni 1999 (1999-06-22)
- PATENT ABSTRACTS OF JAPAN vol. 015, no. 307 (M-1143), 6. August 1991 (1991-08-06) -& JP 03 113168 A (HITACHI CONSTR MACH CO LTD), 14. Mai 1991 (1991-05-14)
- PATENT ABSTRACTS OF JAPAN vol. 013, no. 065 (M-797), 14. Februar 1989 (1989-02-14) -& JP 63 266201 A (KOMATSU LTD), 2. November 1988 (1988-11-02)

## Beschreibung

Die Erfindung betrifft einen Hydromotor nach der Gattung des Hauptanspruchs.

Verstellbare Hydromotoren, die über hydraulische Arbeitsleitungen mit einer Hydropumpe verbunden sind, die ihrerseits durch beispielsweise eine Dieselmaschine angetrieben wird, werden z.B. in hydrostatischen Fahrantrieben verwendet. Üblicherweise werden dort drehzahl- oder hochdruckabhängig gesteuerte Hydromotoren eingesetzt.

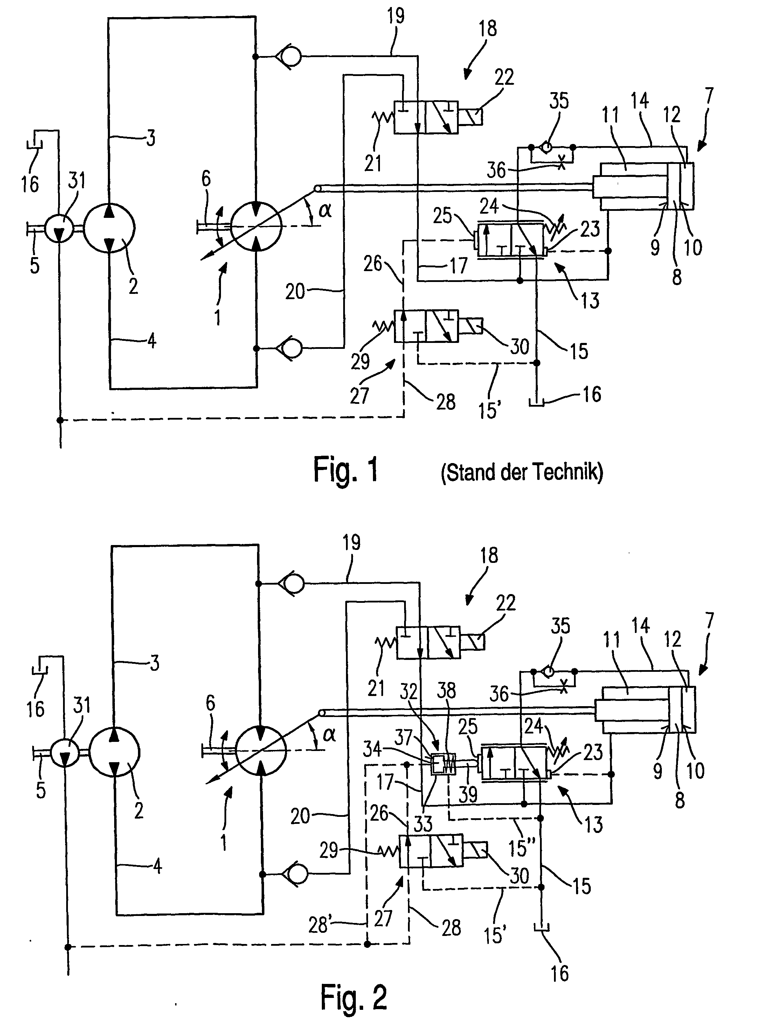

Die in der Figur 1 dargestellte Grundschaltung ist aus dem Prospekt "Verstellmotor A6VM, RD 91604/05.99", Seite 8/40, aus dem Jahre 1999 der Anmelderin bekannt. Die Einstellung des Schwenkwinkels des Hydromotors wird dort durch eine Verstelleinrichtung vorgenommen, in der ein Stellkolben angeordnet ist, dessen entgegengesetzten Kolbenflächen mit Drücken eines Zylinderraums und eines Stelldruckraums beaufschlagt werden können. Das Druckmittel hierzu wird über ein Fahrtrichtungsventil jeweils der förderseitigen Arbeitsleitung, also fahrtrichtungsabhängig entnommen. Die Druckkammer der Verstelleinrichtung wird über das Fahrtrichtungsventil mit dem Druck der förderseitigen Arbeitsleitung bedrückt. In entgegengesetzter Richtung wirkt auf den Stellkolben ein Stelldruck, der über ein Stelldruckregelventil in einer Stelldruckkammer einstellbar ist. Bei der dargestellten drehzahlabhängig geregelten Ausführung ist in der Steuerdruckzuleitung zu dem Stelldruckregelventil zusätzlich ein Steuerdruckschaltventil angeordnet.

Dokument JP-04-370403 offenbart eine Hydromotorheinheit gemäß dem Oberbegriff des Anspruchs 1.

Die bekannte Ausführungsform einer Hydromotoreinheit hat den Nachteil, daß beim Anfahrvorgang bereits bei niedrigen Drehzahlen der Dieselmaschine der Schwenkwinkel des Hydromotors durch den steigenden Druck, der von der Hilfspumpe in der Steuerdruckleitung erzeugt wird, in Richtung kleinerer Schwenkwinkel verstellt wird.

Ferner wird bei sich verringernder Antriebsmotordrehzahl der Hydromotor in seinem Schwenkwinkel so verstellt, daß kaum oder nur geringe Bremsleistung möglich ist. Es besteht zwar die Möglichkeit, über ein Steuerdruckschaltventil den maximalen Schwenkwinkel des Hydromotors zu erzwingen. Dadurch ergibt sich beim Bremsen oder bei Bergabfahrt ein unerwünschter Stop-and-Go-Effekt, da das Fahrzeug über die große Bremsleistung bei maximalem Schwenkwinkel des Hydromotors so weit abgebremst wird, bis die Regelung eingreift und das Fahrzeug wieder beschleunigt. Durch das wiederholte Abbremsen und Beschleunigen läßt sich kein stabiler Fahrzustand erreichen.

Der Erfindung liegt deshalb die Aufgabe zugrunde, eine Hydromotoreinheit zu schaffen, bei der durch Begrenzen des Regelbereichs für die Schwenkwinkelverstellung des Hydromotors ein verbessertes Anfahrverhalten sowie eine ausreichende Bremsleistung erzeugt wird.

Die Aufgabe wird durch die erfindungsgemäße Hydromotoreinheit nach Anspruch 1 gelöst.

Um den Hydromotor während des Anfahrvorgangs auf großem Schwenkwinkel zu belassen, wird der von einer Hilfspumpe an einem Steuerdruckkolben erzeugte Kraft auf eine Meßfläche des Stelldruckregelventils übertragen. Dabei wird der die auf die Meßfläche wirkende Kraft erzeugende Steuerdruckkolben durch eine Feder in seiner Ausgangsposition gehalten, bis der auf den Steuerdruckkolben wirkende Steuerdruck groß genug ist, die Federkraft zu überwinden. Dadurch wird der Regelbeginn während des beim Anfahrvorgang steigenden Drucks der Hilfspumpe verzögert. Der veränderte Regelbeginn bewirkt gleichzeitig ein verändertes Regelende, so daß beim Verzögern des Fahrzeugs der Stellkolben in Richtung maximalen Schwenkwinkels verstellt wird, da der geringer werdende Steuerdruck der Hilfspumpe, sobald der durch die Rückstellfeder bestimmte Grenzwert unterschritten wird, nicht mehr auf die Meßfläche des Stelldruckregelventils übertragen wird und somit der Stellkolben den Hydromotor in Richtung großer Schwenkwinkel verstellt, so daß eine ausreichende Bremsleistung erzeugt werden kann.

Gemäß der Erfindung ist es auch vorgesehen, daß durch die Hubbegrenzung in Verbindung mit einem Mehrwegefahrtrichtungsventil auch bei plötzlicher Umkehrung des Druckverhältnisses und großer Druckdifferenz in den Arbeitsleitungen der Schwenkwinkel des Hydromotors auf einen mittleren Wert eingestellt wird und damit ein definierter Fahrzustand mit ausreichender Bremswirkung erreicht wird.

Mit den in den Unteransprüchen aufgeführten Maßnahmen sind vorteilhafte Weiterbildungen der erfindungsgemäßen Hydromotoreinheit möglich.

Anhand der nachfolgenden Zeichnungen wird zunächst der Stand der Technik und nachfolgend ein Ausführungsbeispiel einer erfindungsgemäßen Hydromotoreinheit beschrieben. Es zeigen:
- Fig. 1: einen hydraulischen Schaltplan eines drehzahlabhängig gesteuerten Hydromotors nach dem Stand der Technik;
- Fig. 2: einen hydraulischen Schaltplan einer weiteren Hydromotoreinheit mit drehzahlabhängiger Steuerung; und
- Fig. 3: einen hydraulischen Schaltplan einer erfindungsgemäßen Hydromotoreinheit mit drehzahlabhängiger Steuerung und Hubbegrenzung.

In Fig. 1 ist ein hydraulischer Schaltplan einer Hydromotoreinheit mit einem Hydromotor 1 nach dem Stand der Technik dargestellt. Der Hydromotor 1 ist mit einer Hydropumpe 2 über Arbeitsleitungen 3 und 4 verbindbar. Die Hydropumpe 2 wird über eine nicht dargestellte Antriebsmaschine, mit der sie über eine Welle 5 verbunden ist, angetrieben. Die Hydropumpe 2 ist für eine Förderung in beide Richtungen ausgelegt.

Über eine Abtriebswelle 6 treibt der Hydromotor 1 beispielsweise einen Radantrieb oder ein Drehwerk eines Baggers an. Das Schluckvolumen des Hydromotors 1 ist über einen Schwenkwinkel α verstellbar. Die Einstellung des Schwenkwinkels α erfolgt über eine Verstelleinrichtung 7. Die Verstelleinrichtung 7 umfaßt einen Stellkolben 8, mit zwei entgegengesetzt gerichteten Kolbenflächen 9 und 10, so daß durch den in einem Zylinderraum 11 und einem Stelldruckraum 12 herrschenden Druck eine Kraft auf den Stellkolben 8 wirkt. Das Druckverhältnis zwischen dem Zylinderraum 11 und dem Stelldruckraum 12 ist durch den Stelldruck in dem Stelldruckraum 12 mittels eines Stelldruckregelventils 13 einstellbar.

Das Stelldruckregelventil 13 verbindet in einer ersten Endposition eine Stelldruckleitung 14 über eine Entspannungsleitung 15 mit einem Tank 16. In seiner zweiten Endposition ist die Stelldruckleitung 14 durch das Stelldruckregelventil 13 mit einer Arbeitsdruckleitung 17 verbunden.

Die Arbeitsdruckleitung 17 ist über ein als Schaltventil ausgeführtes Fahrtrichtungsventil 18 in einer ersten Schaltposition über eine erste Zuleitung 19 mit der Arbeitsleitung 3 bzw. in der zweiten Schaltposition des Fahrtrichtungsventils 18 über eine zweite Zuleitung 20 mit der Arbeitsleitung 4 verbunden. Eine erste Schaltstellung des Fahrtrichtungsventils 18 ist durch eine Druckfeder 21 vorgegeben. Bei Bestromung eines Elektromagneten 22 wird das Fahrtrichtungsventil 18 in seine zweite Schaltposition gebracht.

Die Schaltstellung des Fahrtrichtungsventils 18 wird jeweils durch die Förderrichtung der Hydropumpe 2 vorgegeben. Dadurch wird die jeweils förderseitige bzw. mit Hochdruck beaufschlagte Arbeitsleitung 3 oder 4 mit der Arbeitsdruckleitung 17 verbunden. In dem Zylinderraum 11 liegt somit immer derjenige Druck an, der in der förderseitigen Arbeitsleitung 3 oder 4 herrscht.

Die Einstellung des Schwenkwinkels α erfolgt durch eine resultierende Kraft auf den Stellkolben 8. Das Stelldruckregelventil 13 kann hierzu zwischen seinen Endpositionen jede beliebige Zwischenstellung annehmen. In dem Stelldruckraum 12 ist daher ein Stelldruck einstellbar, der zwischen dem Druck des Tanks 16 und dem Druck in der Arbeitsdruckleitung 17 liegt. In der Stelldruckleitung 14 ist ein entgegen der Richtung des Stelldruckregelventils 13 öffnendes Rückschlagventil 35 angeordnet. Parallel dazu ist eine Drosselstelle 36 ausgebildet.

Zur Einstellung der Position des Stelldruckregelventils 13 wirkt der Druck in der Arbeitsdruckleitung 17 auf eine erste Meßfläche 23. Eine Kraft einer Druckfeder 24, welche einstellbar ausgeführt ist, wirkt in die gleiche Richtung. In entgegengesetzter Richtung wirkt auf eine zweite Meßfläche 25 ein Steuerdruck der Steuerdruckleitung 26. Die Steuerdruckleitung 26 ist über ein Schaltventil 27 mit einer Steuerdruckzuleitung 28 oder bei Betätigung eines einer Druckfeder 29 entgegenwirkenden Elektromagneten 30 mit einer Entspannungsleitung 15' verbindbar. Dadurch ist an der zweiten Meßfläche 25 entweder ein in der Steuerdruckzuleitung 28 anliegender Druck oder der Druck des Tankvolumens 16 wirksam. Der in der Steuerdruckzuleitung 28 verfügbare Druck ist drehzahlabhängig und wird durch eine Hilfspumpe 31, welche über die Welle 5 angetrieben wird, erzeugt. Die Hilfspumpe 31 ist als Konstantpumpe ausgeführt, so daß der in der Steuerdruckzuleitung 28 aufgebaute Druck etwa proportional zu der Drehzahl der Pumpe 2 bzw. des nicht dargestellten Antriebsmotors ist.

In Fig. 2 ist eine Ansteuerung des Stelldruckregelventils 13 eines Hydromotors 1' dargestellt. Anstelle der direkten Beaufschlagung der zweiten Meßfläche 25 mit einem Steuerdruck der Steuerdruckzuleitung 28 ist zur Übertragung der Steuerdruckkraft auf die zweite Meßfläche 25 ein Steuerdruckzylinder 32 vorgesehen. Der Steuerdruckzylinder 32 weist ein Gehäuse 33 auf, in dem ein Steuerdruckkolben 34 angeordnet ist. Der Steuerdruckkolben 34 ist mit einer Kolbenfläche 37 zum Anschluß der Steuerdruckzuleitung 28 orientiert. In dem von dem Steuerdruckkolben 34 und dem Gehäuse 33 eingeschlossenen Steuerdruckvolumen herrscht derselbe Druck wie in der Steuerdruckzuleitung 28'. Der Steuerdruckraum kann bei Betätigung des Schaltventils 27 in das Tankvolumen 16 entspannt werden.

Der Steuerdruckkolben 34 wird durch eine als Druckfeder ausgebildete Rückstellfeder 38 in seiner Ausgangsposition gehalten, so daß das von dem Steuerdruckkolben 34 und dem Gehäuse 33 eingeschlossene Steuerdruckvolumen minimal ist. Auf seiner von der Kolbenfläche 37 abgewandten Seite ist an dem Steuerdruckkolben 34 ein Stößel 39 angeordnet, welcher bei minimalem Steuerdruckvolumen einen geringfügigen Abstand zu der zweiten Meßfläche 25 des Stelldruckregelventils 13 aufweist. Wird die Kolbenfläche 37 mit einem Steuerdruck über die Steuerdruckzuleitung 28 bzw. 28' beaufschlagt, so verfährt der Steuerdruckkolben 34 in eine Position, in der sich ein Kräftegleichgewicht zwischen der hydraulischen, an der Kolbenfläche 37 angreifenden Kraft und der entgegengerichteten Kraft der Rückstellfeder 38 einstellt. Dadurch läßt sich durch Auswahl einer Rückstellfeder 38 mit einer entsprechenden Federkonstante derjenige Steuerdruck einstellen, bei dem der Steuerdruckkolben 34 soweit in Richtung der zweiten Meßfläche 25 verschoben ist, bis der Stößel 39 Kraft auf diese übertragen kann. Steigt der Steuerdruck weiter an, z. B. durch Erhöhen der Drehzahl der Antriebswelle 5 und damit der Hilfspumpe 31, so wird die damit auf den Steuerdruckkolben 34 erzeugte Kraft auf die zweite Meßfläche 25 des Stelldruckregelventils 13 übertragen und das Stelldruckregelventil 13 in Richtung seiner zweiten Endposition ausgelenkt.

Wie bereits zu Fig. 1 ausgeführt, bedeutet eine Verschiebung des Stelldruckregelventils 13 in Richtung seiner zweiten Endposition eine Beaufschlagung der Kolbenfläche 10 des Stellkolbens 8 durch Bedrücken des Stelldruckraums 12 und damit eine Verstellung des Schwenkwinkels des Hydromotors 1' in Richtung kleineren Schluckvolumens. Anstelle der Auswahl der Rückstellfeder 38 anhand ihrer Federkonstante ist es auch möglich, durch Verwendung von Beilagscheiben, mit deren Hilfe die Federvorspannung der Rückstellfeder 38 einstellbar ist, den Regelbeginn zu beeinflussen.

Während des Anfahrvorgangs steht der zunächst drucklose Hydromotor 1' auf maximalem Schwenkwinkel α. Dadurch ist zum Anfahren die Übertragung eines großen Drehmoments möglich. Während des Anfahrvorgangs wird die Drehzahl der nicht dargestellten Antriebsmaschine erhöht, wodurch über die Antriebswelle 5 sowohl die Hydropumpe 2 als auch die Hilfspumpe 31 ihrer Fördermenge erhöhen. In der gezeigten Schaltstellung des Fahrtrichtungsventils 18 fördert die Hydropumpe 2 in die Arbeitsleitung 3. Über die erste Zuleitung 19, das Fahrtrichtungsventil 18 sowie die daran angeschlossene Verbindungsleitung 17 wird der Zylinderraum 11 mit dem Druck der Arbeitsleitung 3 ebenso beaufschlagt wie die erste Meßfläche 23 des Stelldruckregelventils 13. Durch die Beaufschlagung der ersten Meßfläche 23 des Stelldruckregelventils 13 wird das Stelldruckregelventil 13 in der in der Fig. 2 dargestellten ersten Endposition gehalten. Der Stelldruckraum 12 wird über die Drossel 36 und über die Entspannungsleitung 15 in das Tankvolumen 16 entspannt.

Aufgrund der sich erhöhenden Drehzahl des Antriebsmotors und der damit verbundenen Drehzahl der Hilfspumpe 31 erhöht sich der Druck in der Steuerdruckzuleitung 28 bzw. 28'. Die Position des Stelldruckregelventils 13 bleibt dabei solange unverändert, bis durch den in dem Steuerdruckraum des Steuerdruckzylinders 32 an den Kolbenfläche 37 angreifenden Steuerdruck die Rückstellfeder 38 soweit komprimiert ist, daß der Stößel 39 an der zweiten Meßfläche 25 des Stelldruckregelventils 13 angreift. Erst ab dieser einstellbaren Druckgrenze, der einer Drehzahl des Antriebsmotors zugeordnet ist, bewirkt eine weitere Druckerhöhung in der Steuerdruckzuleitung 28 bzw. 28' eine Verschiebung des Stelldruckregelventils 13 in Richtung seiner zweiten Endposition. Bei einer Verschiebung des Stelldruckregelventils 13 in Richtung seiner zweiten Endposition wird der Stelldruckraum 12 mit der förderseitigen Arbeitsleitung 3 verbunden und der Hydromotor 1' in Richtung kleinerer Schwenkwinkel verstellt.

Wird durch den Fahrer die Gaspedalstellung zurückgenommen, und damit die Drehzahl der Antriebsmaschine reduziert, so sinkt der Druck in der Steuerdruckzuleitung 28 bzw. 28' ab. Es wird dabei der durch die Rückstellfeder 38 einstellbare Grenzwert unterschritten und der Stößel 39 hebt von der zweiten Meßfläche 25 des Stelldruckregelventils 13 ab. Das Stelldruckregelventil 13 kehrt aufgrund der Federkraft der Druckfeder 24 sowie des an der ersten Meßfläche 23 anliegenden Drucks in seine erste Endposition zurück. Dabei wird der Stelldruckraum 12 der Verstelleinrichtung entspannt und der Hydromotor 1 in Richtung größeren Schluckvermögens verstellt.

Das Regelende ist damit ebenfalls durch die Rückstellfeder 38 einstellbar, so daß noch oberhalb der Leerlaufdrehzahl während des Absinkens der Drehzahl der Antriebswelle 5 die Position des Stelldruckregelventils 13 ihre erste Endposition erreicht und der Hydromotor 1 durch den verfügbaren Arbeitsdruck in der Arbeitsleitung 3 in Richtung maximalen Schluckvermögens verstellt wird. Durch die Verstellung des Hydromotors 1 in Richtung maximalen Schluckvolumens wird die Bremsleistung erheblich verbessert.

Zur Rückführung von an dem Steuerdruckkolben 34 vorbeiströmenden Leckagefluid ist eine weitere Entspannungsleitung 15" vorgesehen, welche über die Entspannungsleitung 15 mit dem Tankvolumen 16 verbunden ist. Wie aus dem Stand der Technik bekannt ist, ist ein Schaltventil 27 vorgesehen, so daß der in der Steuerdruckzuleitung 28 anliegende und auf die Kolbenfläche 37 wirkende Druck durch Umschalten des Schaltventils 27 gegen das Tankvolumen 16 entspannt werden kann.

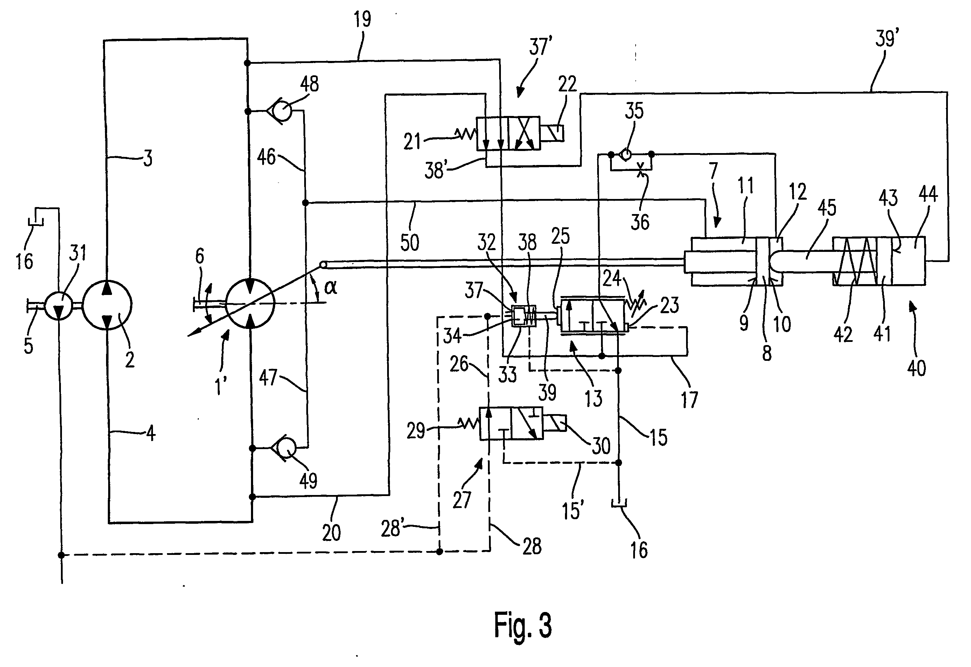

In Fig. 3 ist ein Ausführungsbeispiel eines erfindungsgemäßen Hydromotors 1' mit drehzahlabhängiger Regelung dargestellt, bei dem zusätzlich eine Vorrichtung zur Hubbegrenzung vorgesehen ist, mit der eine Verstellung des Schwenkwinkels auf den maximalen Winkel verhindert wird, um somit den einleitend beschriebenen Stop-and-Go-Effekt entgegenzuwirken. Die Arbeitsleitungen 3 und 4 sind über eine erste Verbindungsleitung 19 bzw. eine zweite Verbindungsleitung 20 mit einem Fahrtrichtungsventil 37 verbunden, das im Ausführungsbeispiel als 4/2-Wegeventil ausgeführt ist. Das Fahrtrichtungsventil 37' weist einen vierten Anschluß 38' auf, der mit einer Speiseleitung 39' verbunden ist. Ferner weist der Hydromotor 1' eine auf den Stellkolben 8 der Verstelleinrichtung 7 wirkende, variable Hubbegrenzung 40 auf.

Die Hubbegrenzung 40 umfaßt einen Hubbegrenzungskolben 41, der durch eine Druckfeder 42 in Richtung seiner Kolbenfläche 43 mit einer Kraft beaufschlagt ist. Auf die Kolbenfläche 43 des Hubbegrenzungskolbens 41 wirkt der in einem Speisedruckraum 44 herrschende Druck. Der Speisedruckraum 44 ist über die Speiseleitung 39' mit dem vierten Anschluß 38' des Fahrtrichtungsventils 37 verbunden. Das Fahrtrichtungsventil 37' ist wiederum als Schaltventil mit zwei Schaltpositionen ausgeführt. In einer ersten Schaltposition ist die erste Verbindungsleitung 19 mit der Arbeitsdruckleitung 17 sowie die zweite Verbindungsleitung 20 mit der Speiseleitung 39' verbunden.

Bei Betätigung des Elektromagneten 22, der entgegen der Kraft einer Druckfeder 21 arbeitet, wird das Fahrtrichtungsventil 37' in seine zweite Schaltposition gebracht. In der zweiten Schaltposition ist die erste Verbindungsleitung 19 mit der Speiseleitung 39 sowie die zweite Verbindungsleitung 20 mit der Arbeitsdruckleitung 17 verbunden.

Die Arbeitsleitungen 3 und 4 sind über eine dritte Verbindungsleitung 46 und eine vierte Verbindungsleitung 47 mit zwei Rückschlagventilen 48 und 49 verbunden. Die Rückschlagventile 48 und 49 öffnen in Richtung der dritten und vierten Verbindungsleitung 46 und 47. Über ein gemeinsames Leitungsstück 50 sind die dritte und vierte Verbindungsleitung 46 und 47 mit dem Zylinderraum 11 verbunden. In dem Zylinderraum 11 herrscht der jeweils höhere Druck der beiden Arbeitsleitungen 3 und 4.

Das Steuerdruckschaltventil 27 zusammen mit dem Steuerdruckzylinder 32 und das Stelldruckregelventil 13 entsprechen in Aufbau und Funktion der vorstehenden Beschreibung zu Fig. 2.

Bei normalem Fahrbetrieb wird die Arbeitsleitung 3 beispielsweise von der Hydropumpe 2 bedrückt, so daß in der förderseitigen Arbeitsleitung 3 Hochdruck herrscht und in der saugseitigen Arbeitsleitung 4 ein Niederdruck herrscht. Über das Rückschlagventil 48 und die dritte Verbindungsleitung 46 sowie das Leitungsstück 50 wird damit der Zylinderraum 11 aus der förderseitigen Arbeitsleitung 3 mit Druckmittel bedrückt. Über das Fahrtrichtungsventil 37' und die erste Verbindungsleitung 19 ist die Arbeitsdruckleitung 17 ebenfalls mit der förderseitigen Arbeitsleitung 3 verbunden. Der Speisedruckraum 44 steht über die zweite Verbindungsleitung 20, das Fahrtrichtungsventil 37', sowie die Speiseleitung 39' mit der saugseitigen Arbeitsleitung 4 in Verbindung. Der Speisedruckraum 44 ist drucklos. Die Druckfeder 42 kann damit den Hubbegrenzungskolben 41 entgegen dem geringen in dem Speisedruckraum 44 herrschenden Restdruck bewegen. Der Anschlag 45 entfernt sich von dem Stellkolben 8 und der Stellkolben 8 kann sowohl in Richtung großer als auch kleiner Schwenkwinkel α frei verstellt werden. Die Einstellung des Schwenkwinkels α erfolgt ausschließlich über die Druckverhältnisse in dem Zylinderraum 11 sowie in der Stelldruckkammer 12. Wie vorstehend bereits beschrieben, ist in der Stelldruckkammer 12 ein Stelldruck einstellbar, der zwischen dem Tankdruck und dem Druck der förderseitigen Arbeitsleitung 3 einstellbar ist. Der Stelldruck wird aufgrund der an den Meßflächen 23 und 25 wirkenden Kräfte eingestellt.

Fährt das Fahrzeug bergab, so kehren sich die Druckverhältnisse in den Arbeitsleitungen 3 und 4 um. Die vorher saugseitige Arbeitsleitung 4 wird durch den von den Rädern angetriebenen Hydromotor 1', der nun als Pumpe wirkt, bedrückt, wodurch der dort herrschende Druck größer wird als der in der vorher förderseitigen Arbeitsleitung 3. Durch die parallele Anordnung der beiden Rückschlagventile 48 und 49 herrscht in dem Leitungsstück 50 der jeweils höhere der beiden Drücke der Arbeitsdruckleitungen 3 und 4. Der Zylinderraum 11 wird damit bei Bergabfahrt aus der saugseitigen Arbeitsleitung 4 mit Druckmittel bedrückt.

Das Fahrtrichtungsventil 37 dagegen wird ausschließlich in Abhängigkeit der Förderrichtung der Hydropumpe 2 geschaltet. In dem Stelldruckraum 12 kann dadurch maximal der Druck der förderseitigen Arbeitsleitung 3 eingestellt werden. Aufgrund des höheren in dem Zylinderraum 11 herrschenden Drucks wirkt auf den Stellkolben 8 eine resultierende Kraft, die den Stellkolben 8 in Richtung der Stelldruckkammer 12 bewegt. Der Schwenkwinkel α wird damit zunehmend in Richtung größeren Schluckvolumens verstellt.

Durch die Umkehrung der Druckverhältnisse in den Arbeitsleitungen 3 und 4 wird der Speisedruckraum 44 über die Speiseleitung 39' durch das Fahrtrichtungsventil 37' mit der vorher saugseitigen Arbeitsleitung 4 verbunden. Da in der vorher saugseitigen Arbeitsleitung 4 bei Druckumkehr der größere Druck herrscht, wird auch in dem Speiseraum 44 ein erhöhter Druck aufgebaut, der auf die Kolbenfläche 43 wirkt. Durch den Druckaufbau bewegt sich der Kolben 41 in Richtung des Stellkolbens 8, wobei er die Rückstellfeder 42 staucht.

Der maximale Verfahrweg des Hubbegrenzungskolbens 41 kann beispielsweise durch eine nicht dargestellte Begrenzung auf einen bestimmten Schwenkwinkel eingestellt sein. Die Kolbenfläche 43 ist größer als die erste Kolbenfläche 9 des Stellkolbens 8 und auf beide Kolbenflächen 9 und 43 wirkt ein gleich großer Druck aus der saugseitigen Arbeitsleitung 4, so daß der Stellkolben 8 lediglich so weit in Richtung großer Schwenkwinkel verstellt werden kann, bis seine Bewegung durch den Anschlag 45 begrenzt ist.

Durch die so begrenzte Verstellung des Stellkolbens 8 in Richtung großer Schwenkwinkel α wird verhindert, daß ein Überbremsen des Fahrzeugs auftritt, das von einem Wiederbeschleunigen gefolgt wäre.

Ist das Ende einer Bergabfahrt erreicht, so kehrt das Druckverhältnis der beiden Arbeitsleitungen 3 und 4 wieder um. Der Druck in der förderseitigen Arbeitsleitung 3 ist damit wiederum größer als in der saugseitigen Arbeitsleitung 4. Das zuvor geöffnete Rückschlagventil 49 schließt sich und der Zylinderraum 11 wird wieder aus der förderseitigen Arbeitsleitung 3 bedrückt. Der Speisedruckraum 44 ist weiterhin mit der saugseitigen Arbeitsleitung 4 verbunden, so daß der Druck, der auf die Kolbenfläche 43 wirkt, sinkt. Der Hubbegrenzungskolben 41 mitsamt dem Anschlag 45 wird daher durch die Rückstellfeder 42 wieder in seine Ausgangsposition zurückgedrängt. Der mögliche Verstellweg des Stellkolbens 8 reicht wieder bis zum maximal möglichen Schwenkwinkel α.

Bei einer Umkehrung der Fahrtrichtung, die gleich bedeutend ist mit einer geänderten Förderrichtung der Hydropumpe 2, wird die Arbeitsleitung 4 zur förderseitigen Arbeitsleitung und die Arbeitsleitung 3 zur saugseitigen Arbeitsleitung. Gleichzeitig wird durch Betätigung des Elektromagneten 22 das Fahrtrichtungsventil 27 in seine zweite Schaltposition gebracht.

## Patentansprüche

1. Hydromotoreinheit mit einem Hydromotor (1'), der mit zwei Arbeitsleitungen (3, 4) verbindbar ist, wobei der Schwenkwinkel (α) des Hydromotors (1') durch eine Verstelleinrichtung (7) verstellbar ist, die einen stellkolben (8) mit zwei Kolbenflächen (9, 10) aufweist, wobei der auf eine erste Kolbenfläche (10) in einem Stelldruckraum (12) wirkende Stelldruck durch ein Stelldruckregelventil (13) einstellbar ist, wobei das Stelldruckregelventil (13) zwischen zwei Endpositionen verstellbar ist und in einer ersten Stellrichtung des Stelldruckregelventils (13) eine dem Druck in einer Arbeitsleitung (3, 4) proportionale Stellkraft angreift und in einer zweiten, entgegengesetzten Stellrichtung des Stelldruckregelventils (13) erst bei Überschreiten eines Grenzwerts eines Steuerdrucks in einer Steuerdruckzuleitung (28, 28') ein Steuerdruckkolben (34) mit einer von dem Steuerdruck abhängigen Kraft angreift,
**dadurch gekennzeichnet,**
**daß** zur Einstellung eines definierten Schwenkwinkels (α) des Hydromotors (1') bei Druckumkehr in den Arbeitsleitungen (3, 4) der Stellweg des Stellkolbens (8) in Richtung großer Schwenkwinkel durch eine auf den Stellkolben (8) einwirkende variable Hubbegrenzung (40) begrenzt ist.

2. Hydromotoreinheit nach Anspruch 1,
**dadurch gekennzeichnet,**
**daß** der Steuerdruckkolben (34) mit der Rückstellkraft einer Rückstellfeder (38) beaufschlagt ist.

3. Hydromotoreinheit nach Anspruch 2,
**dadurch gekennzeichnet,**
**daß** durch die dem an einer Kolbenfläche (37) des Steuerdruckkolbens (34) angreifenden Steuerdruck entgegenwirkende Rückstellkraft der Rückstellfeder (38) der Grenzwert des Steuerdrucks einstellbar ist.

4. Hydromotoreinheit nach Anspruch 3,
**dadurch gekennzeichnet,**
**daß** die Größe des an der Kolbenfläche (37) angreifenden Steuerdrucks von der Drehzahl der Antriebsmaschine abhängt.

5. Hydromotoreinheit nach einem der Ansprüche 1 bis 4,
**dadurch gekennzeichnet,**
**daß** die variable Hubbegrenzung (40) durch einen Druck auf einen Hubbegrenzungskolben (41) in einem Speisedruckraum (44) hydraulisch betätigbar ist.

6. Hydromotoreinheit nach Anspruch 5,
**dadurch gekennzeichnet,**
**daß** der für die Stelleinrichtung (7) maximal verfügbare Druck durch ein Fahrtrichtungsventil (18, 37') der mit Hochdruck beaufschlagten Arbeitsleitung (3, 4) entnommen ist.

7. Hydromotoreinheit nach Anspruch 6,
**dadurch gekennzeichnet,**
**daß** der Speisedruckraum (44) über das Fahrtrichtungsventil (37') mit der mit Niederdruck beaufschlagte Arbeitsleitung (3, 4) verbunden ist.

8. Hydromotoreinheit nach einem der Ansprüche 5 bis 7,
**dadurch gekennzeichnet,**
**daß** der maximale Verfahrweg des Hubbegrenzungskolbens (41) durch einen Anschlag fest einstellbar ist.

9. Hydromotoreinheit nach einem der Ansprüche 5 bis 8,
**dadurch gekennzeichnet,**
**daß** der Hubbegrenzungskolben (41) durch eine Druckfeder (42) entgegen dem in dem Speisedruckraum (44) herrschenden Druck mit einer Kraft beaufschlagt ist.

10. Hydromotoreinheit nach einem der Ansprüche 1 bis 9,
**dadurch gekennzeichnet,**
**daß** eine dem Stelldruck entgegengesetzt wirkende Kolbenfläche.(9) des Stellkolbens (8) mit jeweils derjenigen Arbeitsleitung (3, 4) verbunden ist, in der der größere Druck herrscht.

11. Hydromotoreinheit nach einem der Ansprüche 1 bis 10,
**dadurch gekennzeichnet,**
**daß** der Druck in der Arbeitsleitung (3; 4) an einer ersten Meßfläche (23) des Stelldruckregelventils (13) und der Stelldruckkolben (34) an einer zweiten Meßfläche (25) des Stelldruckregelventils (13) angreifen.

## Claims

1. A hydraulic motor unit with a hydraulic motor (1') which is capable of being connected to two working lines (3, 4), the swash-plate angle (α) of the hydraulic motor (1') being capable of being adjusted by an adjusting device (7) which exhibits an actuating piston (8) with two piston faces (9, 10), the actuating pressure which acts on a first piston face (10) in an actuating-pressure chamber (12) being capable of being set by an actuating-pressure regulating valve (13), the actuating-pressure regulating valve (13) being capable of being adjusted between two end positions, and in a first actuating direction of the actuating-pressure regulating valve (13) an actuating force acts which is proportional to the pressure in a working line (3, 4), and in a second, opposite actuating direction of the actuating-pressure regulating valve (13) a control-pressure piston (34) acts with a force which is dependent on the control pressure only when a limiting value of a control pressure in a control-pressure supply line (28, 28') is exceeded,
**characterised in that**
for the purpose of setting a defined swash-plate angle (α) of the hydraulic motor (1') in the case of pressure inversion in the working lines (3, 4) the travel of the actuating piston (8) in the direction of large swash-plate angles is limited by a variable stroke-limiting mechanism (40) acting on the actuating piston (8).

2. Hydraulic motor unit according to Claim 1,
**characterised in that**
the control-pressure piston (34) is loaded with the restoring force of a restoring spring (38).

3. Hydraulic motor unit according to Claim 2,
**characterised in that**
the limiting value of the control pressure is capable of being set by the restoring force of the restoring spring (38) which counteracts the control pressure acting on a piston face (37) of the control-pressure piston (34).

4. Hydraulic motor unit according to Claim 3,
**characterised in that**
the magnitude of the control pressure acting on the piston face (37) depends upon the speed of the prime mover.

5. Hydraulic motor unit according to one of Claims 1 to 4,
**characterised in that**
the variable stroke-limiting mechanism (40) is capable of being actuated hydraulically by a pressure on a stroke-limiting piston (41) in a feed-pressure chamber (44).

6. Hydraulic motor unit according to Claim 5,
**characterised in that**
the maximum available pressure for the adjusting device (7) is drawn by a driving-direction valve (18, 37') from the working line (3, 4) that is loaded with high pressure.

7. Hydraulic motor unit according to Claim 6,
**characterised in that**
the feed-pressure chamber (44) is connected via the driving-direction valve (37') to the working line (3, 4) that is loaded with low pressure.

8. Hydraulic motor unit according to one of Claims 5 to 7,
**characterised in that**
the maximum traversed distance of the stroke-limiting piston (41) is capable of being set permanently by a stop.

9. Hydraulic motor unit according to one of Claims 5 to 8,
**characterised in that**
the stroke-limiting piston (41) is loaded by a compression spring (42) with a force contrary to the pressure prevailing in the feed-pressure chamber (44).

10. Hydraulic motor unit according to one of Claims 1 to 9,
**characterised in that**
a piston face (9) of the actuating piston (8) acting contrary to the actuating pressure is connected in the given case to that working line (3, 4) in which the greater pressure prevails.

11. Hydraulic motor unit according to one of Claims 1 to 10,
**characterised in that**
the pressure in the working line (3, 4) acts on a first measuring surface (23) of the actuating-pressure regulating valve (13), and the actuating-pressure piston (34) acts on a second measuring surface (25) of the actuating-pressure regulating valve (13).

## Revendications

1. Unité de moteur hydraulique comprenant un moteur hydraulique (1'), qui peut être relié à deux conduites de travail (3, 4), l'angle de pivotement (α) du moteur hydraulique (1') pouvant être réglé par un dispositif de réglage (7), qui comprend un piston de réglage (8) doté de deux surfaces de piston (9, 10), la pression de réglage agissant sur une première surface de piston (10) dans une chambre de pression de réglage (12) pouvant être réglée par une soupape de régulation de pression de réglage (13), la soupape de régulation de pression de réglage (13) pouvant être réglée entre deux positions finales et, dans une première position de réglage de la soupape de régulation de pression de réglage (13), une force de réglage proportionnelle à la pression dans une conduite de travail (3, 4) étant appliquée, et dans une seconde position de réglage opposée de la soupape de régulation de pression de réglage (13), un piston de pression de commande (34) n'est appliqué avec une force dépendant de la pression de commande que lorsqu'une valeur seuil d'une pression de commande dans une conduite d'amenée de pression de commande (28, 28') est dépassée,
**caractérisée en ce que**,
pour régler un angle de pivotement (α) défini du moteur hydraulique (1') à l'occasion d'un renversement de pression dans les conduites de travail (3, 4), la course de réglage du piston de réglage (8) en direction d'un plus grand angle de pivotement est limitée par un limiteur de course variable (40) agissant sur le piston de réglage (8).

2. Unité de moteur hydraulique selon la revendication 1,
**caractérisée en ce que**
le piston de pression de commande (34) est sollicité par la force de rappel d'un ressort de rappel (38).

3. Unité de moteur hydraulique selon la revendication 2,
**caractérisée en ce que**
la valeur seuil de la pression de commande peut être réglée par la force de rappel du ressort de rappel (38) réagissant à la pression de commande appliquée à une surface de piston (37) du piston de pression de commande (34).

4. Unité de moteur hydraulique selon la revendication 3,
**caractérisée en ce que**
la valeur de la pression de commande appliquée à la surface de piston (37) dépend du régime du moteur d'entraînement.

5. Unité de moteur hydraulique selon l'une quelconque des revendications 1 à 4,
**caractérisée en ce que**
le limiteur de course variable (40) peut être actionné de façon hydraulique par une pression sur un piston limiteur de course (41) dans une chambre de pression d'alimentation (44).

6. Unité de moteur hydraulique selon la revendication 5,
**caractérisée en ce que**
la pression maximale disponible pour le système de réglage (7) est soutirée par une soupape de direction de déplacement (18, 37') de la conduite de travail (3, 4) alimentée en haute pression.

7. Unité de moteur hydraulique selon la revendication 6,
**caractérisée en ce que**
la chambre de pression d'alimentation (44) est reliée par la soupape de direction de déplacement (37') à la conduite de travail (3, 4) alimentée en basse pression.

8. Unité de moteur hydraulique selon l'une quelconque des revendications 5 à 7,
**caractérisée en ce que**
la course maximale de déplacement du piston de limite de course (41) peut être réglée fixement par une butée.

9. Unité de moteur hydraulique selon l'une quelconque des revendications 5 à 8,
**caractérisée en ce que**
le piston limiteur de course (41) est sollicité en force par un ressort de pression (42) à l'encontre de la pression régnant dans la chambre de pression d'alimentation (44).

10. Unité de moteur hydraulique selon l'une quelconque des revendications 1 à 9,
**caractérisée en ce que**
une surface de piston (9) du piston de réglage (8) réagissant à la pression de réglage est reliée à la conduite de travail respective (3, 4) dans laquelle règne la plus grande pression.

11. Unité de moteur hydraulique selon l'une quelconque des revendications 1 à 10,
**caractérisée en ce que**
la pression dans la conduite de travail (3, 4) est appliquée à une première surface de mesure (23) de la soupape de régulation de pression de réglage (13) et le piston de pression de réglage (34) à une seconde surface de mesure (25) de la soupape de régulation de pression de réglage (13).
